# EUROPEAN PATENT APPLICATION

(11) **EP 4 502 876 A1**
(43) Date of publication of application: **05.02.2025**
(21) Application number: 22935327.1
(22) Date of filing: 30.03.2022
(51) Int. Cl.: G06N 20/00

(54) **SUBGRAPH STRUCTURE SELECTION PROGRAM, DEVICE, AND METHOD**

(71) Applicant: FUJITSU LIMITED, Kawasaki-shi, Kanagawa 211-8588 (JP)
(72) Inventor: OKAJIMA, Seiji, Kawasaki-shi, Kanagawa 211-8588 (JP)
(74) Representative: Hoffmann Eitle
(86) International application number: PCT/JP2022/016245
(87) International publication number: WO 2023/188182

(57) **Abstract**

A subgraph structure selection device calculates appearance frequencies for each graphlet in an explanatory graph, calculates explanation scores for each graphlet, based on degrees of contribution for each node given to the explanatory graph, calculates, for each graphlet, a product of an average appearance frequency, a standard deviation of the appearance frequencies, and an average explanation score in an explanatory graph set, as an evaluation value, adds the graphlets to a list in descending order of the evaluation values, calculates accuracy of a prediction model when the explanatory graph vectorized using the graphlets included in the list is input, and in a case where a change in accuracy satisfies a predetermined condition, selects the graphlets added to the list, as graphlets to be finally used in a graph kernel.

## Description

### TECHNICAL FIELD

The disclosed technique relates to a subgraph structure selection program, a subgraph structure selection device, and a subgraph structure selection method.

### BACKGROUND ART

There is a technique in which graph data is input to a machine learning model such as a neural network to obtain a prediction result according to a task, and a subgraph contributing to the obtained prediction result is also obtained from the input graph data. This subgraph is information that can explain a process of prediction by the machine learning model. In addition, a machine learning model capable of explaining a process of prediction in this manner is referred to as explainable artificial intelligence (XAI), and XAI whose input data is graph data is referred to as graph XAI.

In order to set graph data as an input of a machine learning model, there is a technique called a graph kernel that maps graph data to a high-dimensional vector. Examples of the graph kernel include Random walk kernel, Graphlet kernel, Weisfeiler-Lehman kernel and the like. In these graph kernels, each element of a mapped vector indicates a primitive subgraph in many cases. In the graph XAI, it is desirable to obtain vector representation of graph data as simple as possible.

For example, the Graphlet kernel enumerates graphlets made up of a small number of nodes and counts up the number of times each graphlet appears in the graph to vectorize the graph. The graphlet includes a predefined number of nodes and is obtained by enumerating all coupling patterns between the nodes. In a case where the number of nodes is {3, 4, 5}, the number of graphlets is 29, and accordingly, the vector has 29 dimensions. This vectorization of a graph using graphlets has a problem that high computational cost for counting up graphlets is incurred. In order to suppress the computational cost, it is conceivable to decrease the number of graphlets by narrowing the number of nodes, for example, by setting the number of nodes of the graphlet to {3, 4}. However, in this case, since the accuracy of training and prediction of the machine learning model using the vector of the graph data is adversely affected, the number of graphlets may not be allowed to be simply decreased.

Thus, in order to reduce the computational cost of vectorization of a graph and improve the accuracy of training and prediction, a technique of selecting a graphlet has been proposed. This technique focuses on the fact that the appearance frequency of a particular graphlet is low in a graph of a particular domain in many cases and deletes a graphlet having a smaller appearance frequency or standard deviation in the graph. In addition, this technique deletes redundant graphlets having high correlation with other graphlets.

### CITATION LIST

### NON-PATENT DOCUMENT

Non-Patent Document 1: Furqan Aziz, Afan Ullah, Faiza Shah, "Feature selection and learning for graphlet kernel" Pattern Recognition Letters, Volume 136, p. 63-70, ISSN 0167-8655, August 2020.

### SUMMARY OF INVENTION

### TECHNICAL PROBLEM

However, in the above-described conventional technique, there is a possibility that a graphlet corresponding to a significant subgraph in the graph may be deleted from graphlets due to low frequency or redundancy.

As one aspect, an object of the disclosed technique is to select a significant subgraph structure as a subgraph structure to be used for a graph kernel.

### SOLUTION TO PROBLEM

As one form, the disclosed technique calculates appearance frequencies for each of a plurality of subgraph structures that have been predefined, in each of one or more prediction target graphs that include a plurality of nodes and a plurality of edges. In addition, the disclosed technique calculates explanation scores for each of the plurality of subgraph structures, based on degrees of contribution for each of the nodes or the edges to a prediction result output when each of the one or more prediction target graphs is input to a machine learning model that has been trained. In addition, the disclosed technique calculates, for each of the plurality of subgraph structures, products of averages of the appearance frequencies, standard deviations of the appearance frequencies, and the averages of the explanation scores in the one or more prediction target graphs. In addition, the disclosed technique selects one subgraph structure from among the plurality of subgraph structures in descending order of the products and adds the selected one subgraph structure to a list. Every time the selected one subgraph structure is added to the list, the disclosed technique calculates accuracy of the machine learning model when the prediction target graphs vectorized by using the subgraph structures included in the list is input. Then, in a case where a change in the accuracy satisfies a predetermined condition, the disclosed technique selects the subgraph structures added to the list, as the subgraph structures to be finally used.

### ADVANTAGEOUS EFFECTS OF INVENTION

As one aspect, there is an effect that a significant subgraph structure may be selected as a subgraph structure to be used for a graph kernel.

### BRIEF DESCRIPTION OF DRAWINGS

FIG. 1 is a functional block diagram of a subgraph structure selection device.
FIG. 2 is a diagram illustrating an example of an explanatory graph.
FIG. 3 is a diagram for explaining a difficulty in selecting a graphlet.
FIG. 4 is a diagram illustrating an example of graphlets.
FIG. 5 is a diagram for explaining calculation of an appearance frequency and an explanation score of a graphlet.
FIG. 6 is a block diagram illustrating a schematic configuration of a computer functioning as the subgraph structure selection device.
FIG. 7 is a flowchart illustrating an example of subgraph structure selection processing.
FIG. 8 is a diagram for explaining processing using selected graphlets.

### DESCRIPTION OF EMBODIMENTS

Hereinafter, an example of embodiments according to the disclosed technique will be described with reference to the drawings.

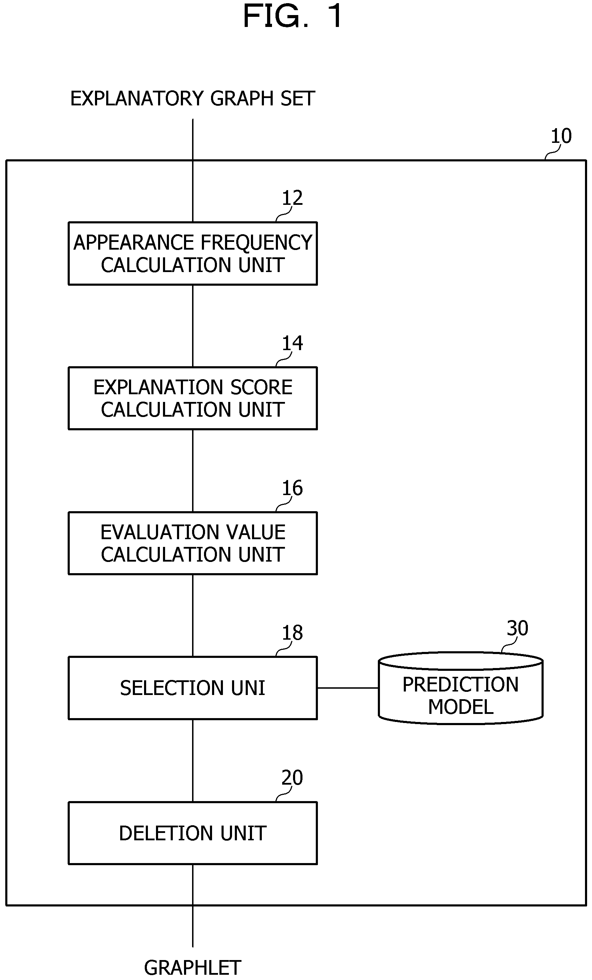

As illustrated in FIG. 1, an explanatory graph set is input to a subgraph structure selection device 10. The subgraph structure selection device 10 selects and outputs a graphlet to be used in a graph kernel, based on the explanatory graph set. Note that the graphlet is an example of a "subgraph structure" of the disclosed technique.

The explanatory graph is a graph including a plurality of nodes and a plurality of edges coupling between the nodes and is a graph in which a degree of contribution to a prediction result output when input to a trained machine learning model, that is, a degree of involvement in prediction is given to each node or edge. In the present embodiment, a case where the degree of contribution is given to each node will be described as an example.

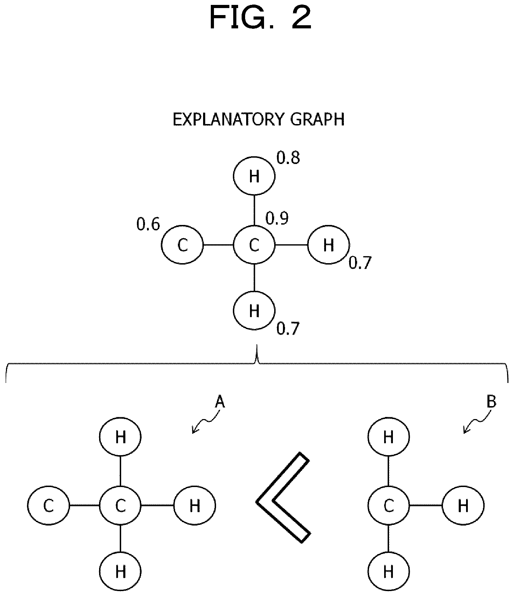

An example of the explanatory graph is illustrated in the upper diagram of FIG. 2. In the upper diagram of FIG. 2, an example of a graph representing a chemical structure is illustrated. The number written together with each node (circle) denotes the degree of contribution. In the present embodiment, on the supposition that an average of the degrees of contribution of nodes included in a significant portion to the prediction result is high, the degree of contribution is used to select a graphlet. In a case of a chemical structure as in FIG. 2, this supposition corresponds to that an average of degrees of contribution of nodes constituting a chemically significant structure is high. For example, in the explanatory graph in the upper diagram of FIG. 2, among a subgraph illustrated in A of the lower diagram of FIG. 2 (hereinafter, referred to as a "subgraph A") and a subgraph illustrated in B of the lower diagram of FIG. 2 (hereinafter, referred to as a "subgraph B"), the subgraph B has a higher average of the degrees of contribution. Therefore, it is represented that the subgraph B has a more significant structure in the explanatory graph.

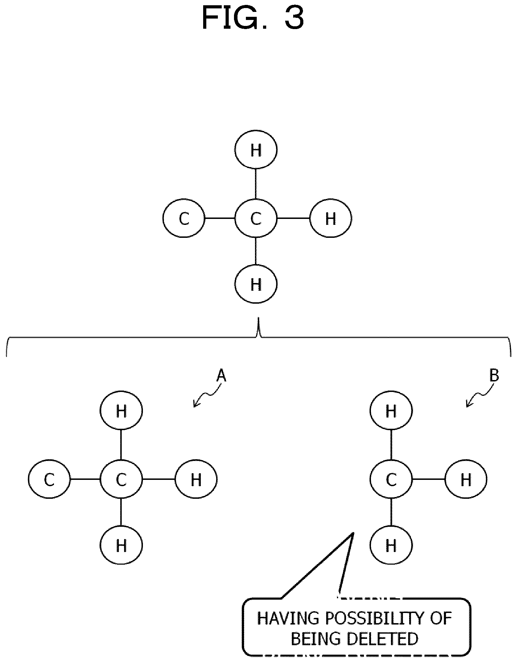

Here, as in the above-described conventional technique, when a graphlet to be used for a graph kernel is selected, it is assumed that a graphlet having a smaller appearance frequency or standard deviation in an explanatory graph is deleted and a redundant graphlet having higher correlation with another graphlet is also deleted. In the example in FIG. 2 described above, in a case where the subgraphs A and B simultaneously appear at a high frequency, as illustrated in FIG. 3, there is a possibility that a graphlet having a structure matching a subgraph representing a chemically meaningful structure CH₃ may be deleted for the reason that this subgraph is redundant. That is, there is a possibility that a significant graphlet may be excluded from graphlets to be used for a graph kernel. Thus, in the present embodiment, as described above, the degree of contribution given to each node of the explanatory graph is used to select a graphlet.

The subgraph structure selection device 10 functionally includes an appearance frequency calculation unit 12, an explanation score calculation unit 14, an evaluation value calculation unit 16, a selection unit 18, and a deletion unit 20. In addition, a prediction model 30 that is a trained machine learning model is stored in a predetermined storage area of the subgraph structure selection device 10. Note that the evaluation value calculation unit 16 is an example of a "product calculation unit" of the disclosed technique.

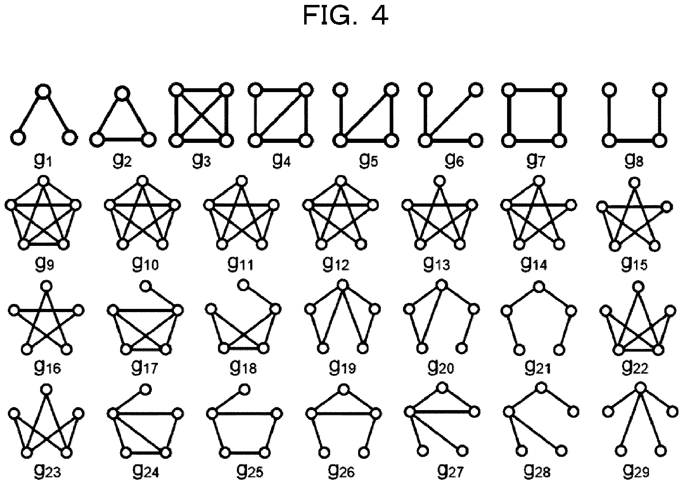

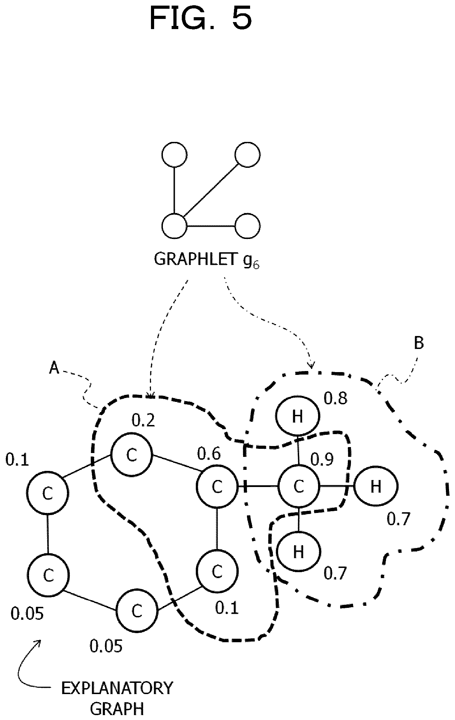

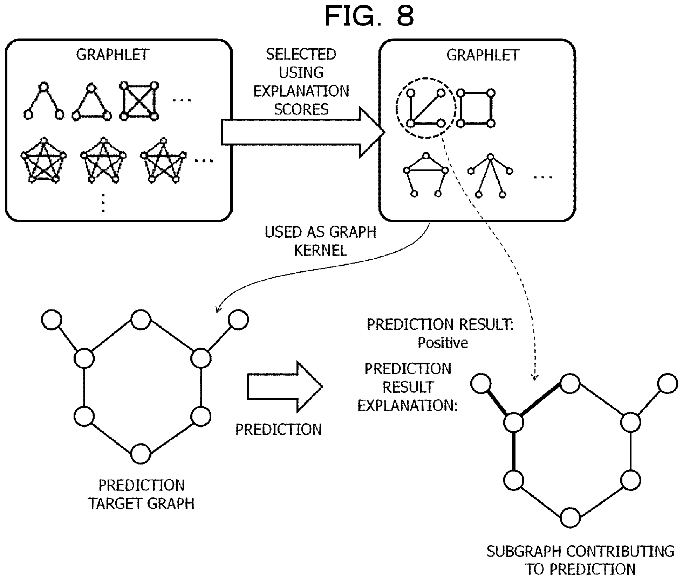

The appearance frequency calculation unit 12 calculates an appearance frequency of each of a plurality of predefined graphlets in each of explanatory graphs included in the explanatory graph set. As the plurality of predefined graphlets, as illustrated in FIG. 4, 29 graphlets from g₁ to g₂₉ having the number of nodes of {3, 4, 5} may be defined, for example. The drawings of the graphlets used in FIG. 4 and a part of FIGs. 5 and 8 to be described later are cited from the drawings of Non-Patent Document 1. For example, as illustrated in FIG. 5, the appearance frequency calculation unit 12 calculates the appearance frequency by searching the explanatory graph for a subgraph having a structure matching any one graphlet (in the example in FIG. 5, the graphlet g₆) and counting the subgraphs found by the search. In the example in FIG. 5, a subgraph A (the subgraph indicated by the dashed line) and a subgraph B (the subgraph indicated by the dashed-dotted line) exist as subgraphs having structures matching the structure of the graphlet g₆. Therefore, the appearance frequency calculation unit 12 calculates the appearance frequency of the graphlet g₆ as "2".

The explanation score calculation unit 14 calculates an explanation score of each graphlet, based on the degrees of contribution for each node of the explanatory graph. Specifically, the explanation score calculation unit 14 calculates the average of the degree of contribution of nodes included in the subgraph matching the structure of the graphlet in the explanatory graph, as the explanation score of the graphlet.

In a case where there is a plurality of subgraphs matching the structure of the graphlet in one explanatory graph, the explanation score calculation unit 14 sets a higher one of the explanation scores calculated for each of the plurality of subgraphs, as the explanation score of that graphlet. In the example in FIG. 5, the explanation score of the subgraph A is (0.2 + 0.6 + 0.9 + 0.1)/4 = 0.45, and the explanation score of the subgraph B is (0.8 + 0.9 + 0.7 + 0.7)/4 = 0.775. Therefore, the explanation score calculation unit 14 calculates the explanation score of the graphlet g₆ for the relevant explanatory graph as 0.775.

Note that, in a case where there is a plurality of subgraphs matching the structure of the graphlet, the explanation score calculation unit 14 is not limited to a case of selecting a higher one of the explanation scores and may calculate an average of the explanation scores for the plurality of subgraphs, as the explanation score of the relevant graphlet.

The evaluation value calculation unit 16 calculates, for each of the plurality of graphlets, a product of the average of the appearance frequencies, the standard deviation of the appearance frequencies, and the average of the explanation scores in the explanatory graph set, as an evaluation value. Specifically, the evaluation value calculation unit 16 calculates, for the graphlet gᵢ, an average µᵢ in all the explanatory graphs of the appearance frequencies calculated from each explanatory graph (hereinafter, referred to as an "average appearance frequency"). In addition, the evaluation value calculation unit 16 calculates, for the graphlet gᵢ, standard deviation σᵢ in all the explanatory graphs of the appearance frequencies calculated from each explanatory graph. In addition, the evaluation value calculation unit 16 calculates, for the graphlet gᵢ, an average sᵢ in all the explanatory graphs of the explanation scores calculated from each explanatory graph (hereinafter, referred to as an "average explanation score"). Then, the evaluation value calculation unit 16 calculates the product of the average appearance frequency µᵢ, the standard deviation σᵢ, and the average explanation score sᵢ, as an evaluation value µσsᵢ of the graphlet gᵢ.

The selection unit 18 selects one graphlet from among the plurality of graphlets in descending order of the evaluation values calculated by the evaluation value calculation unit 16 and adds the selected one graphlet to a list. Every time the selected one graphlet is added to the list, the selection unit 18 calculates the accuracy of the prediction model 30 when the explanatory graph vectorized using the graphlets included in the list is input. In a case where a change in accuracy satisfies a predetermined condition, the selection unit 18 passes the list to the deletion unit 20. The selection unit 18 may set the predetermined condition as a case where the accuracy is no longer enhanced or a case where the accuracy is degraded. The selection unit 18 may determine a case where the difference between the accuracy calculated last time and the accuracy calculated this time is within a predetermined value, as a case where the accuracy is no longer enhanced. In addition, the selection unit 18 may determine a case where the accuracy calculated this time is lower than the accuracy calculated last time, as a case where the accuracy is degraded.

The deletion unit 20 calculates indices indicating correlations between all pairs for the graphlets added to the list and, for a pair having an index equal to or greater than a predetermined value, deletes a graphlet having a lower average explanation score s from the list. The deletion unit 20 may calculate cross-correlation c as an index indicating the correlation. This is to delete one of two graphlets having high correlation because redundancy is caused in a case where both of the graphlets are kept. At that time, by deleting the graphlet having a lower average explanation score s, a graphlet having a significant structure is likely to remain. The deletion unit 20 outputs the graphlets remaining in the list, as graphlets to be finally used in a graph kernel.

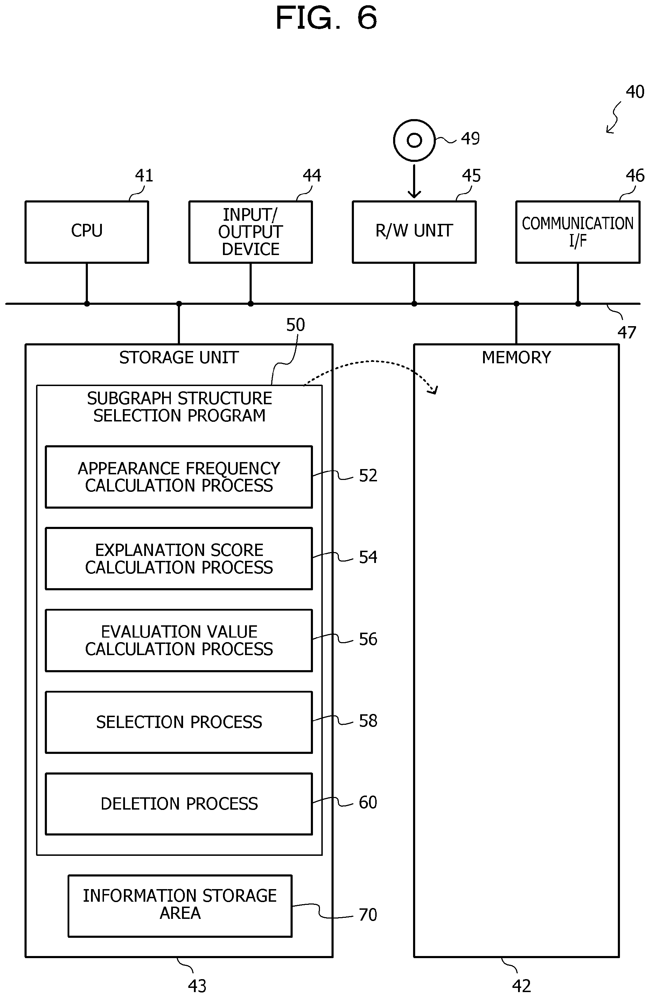

The subgraph structure selection device 10 may be implemented by, for example, a computer 40 illustrated in FIG. 6. The computer 40 includes a central processing unit (CPU) 41, a memory 42 as a temporary storage area, and a nonvolatile storage unit 43. In addition, the computer 40 includes an input/output device 44 such as an input unit and a display unit, and a read/write (R/W) unit 45 that controls reading and writing of data from and to a storage medium 49. In addition, the computer 40 includes a communication interface (I/F) 46 to be coupled to a network such as the Internet. The CPU 41, the memory 42, the storage unit 43, the input/output device 44, the R/W unit 45, and the communication I/F 46 are coupled to each other via a bus 47.

The storage unit 43 may be implemented by a hard disk drive (HDD), a solid state drive (SSD), a flash memory, or the like. The storage unit 43 as a storage medium stores a subgraph structure selection program 50 for causing the computer 40 to function as the subgraph structure selection device 10. The subgraph structure selection program 50 includes an appearance frequency calculation process 52, an explanation score calculation process 54, an evaluation value calculation process 56, a selection process 58, and a deletion process 60. In addition, the storage unit 43 includes an information storage area 70 in which information constituting the prediction model 30 is stored.

The CPU 41 reads the subgraph structure selection program 50 from the storage unit 43 to load the read subgraph structure selection program 50 into the memory 42 and sequentially executes the processes included in the subgraph structure selection program 50. The CPU 41 operates as the appearance frequency calculation unit 12 illustrated in FIG. 1 by executing the appearance frequency calculation process 52. In addition, the CPU 41 operates as the explanation score calculation unit 14 illustrated in FIG. 1 by executing the explanation score calculation process 54. In addition, the CPU 41 operates as the evaluation value calculation unit 16 illustrated in FIG. 1 by executing the evaluation value calculation process 56. In addition, the CPU 41 operates as the selection unit 18 illustrated in FIG. 1 by executing the selection process 58. In addition, the CPU 41 operates as the deletion unit 20 illustrated in FIG. 1 by executing the deletion process 60. In addition, the CPU 41 reads information from the information storage area 70 and loads the prediction model 30 into the memory 42. This will cause the computer 40 that has executed the subgraph structure selection program 50 to function as the subgraph structure selection device 10. Note that the CPU 41 that executes the program is hardware.

Note that the functions implemented by the subgraph structure selection program 50 can also be implemented by, for example, a semiconductor integrated circuit, in more detail, an application specific integrated circuit (ASIC) or the like.

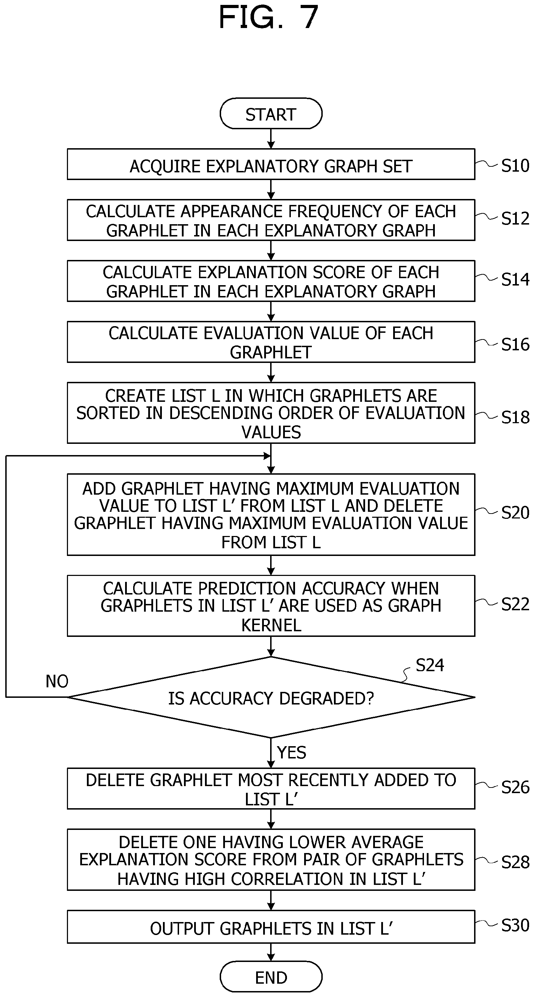

Next, actions of the subgraph structure selection device 10 according to the present embodiment will be described. When an explanatory graph set is input to the subgraph structure selection device 10 and the subgraph structure selection device 10 is instructed to select a graphlet, the subgraph structure selection device 10 executes subgraph structure selection processing illustrated in FIG. 7. Note that the subgraph structure selection processing is an example of a subgraph structure selection method of the disclosed technique.

In step S10, the appearance frequency calculation unit 12 acquires the explanatory graph set input to the subgraph structure selection device 10. Next, in step S12, the appearance frequency calculation unit 12 searches an explanatory graph for a subgraph having a structure matching the structure of a graphlet and counts the subgraphs found by the search, thereby calculating the appearance frequency of each graphlet in each explanatory graph.

Next, in step S14, the explanation score calculation unit 14 calculates the average of the degrees of contribution of the nodes included in the subgraph matching the structure of the graphlet in the explanatory graph, as the explanation score of that graphlet. The explanation score calculation unit 14 calculates the explanation score of each graphlet in each explanatory graph.

Next, in step S16, the evaluation value calculation unit 16 calculates, for each graphlet, the average appearance frequency that is an average of the appearance frequencies calculated from each explanatory graph, the standard deviation of the appearance frequencies, and the average explanation score that is an average of the explanation scores calculated from each explanatory graph. Then, the evaluation value calculation unit 16 calculates the product of the average appearance frequency, the standard deviation, and the average explanation score, as the evaluation value of each graphlet.

Next, in step S18, the selection unit 18 creates a list L in which a plurality of graphlets are sorted in descending order of the evaluation values calculated in step S16 above. Next, in step S20, the selection unit 18 selects a graphlet having a maximum evaluation value from the list L to add the selected graphlet to a list L' and also to delete the selected graphlet from the list L.

Next, in step S22, the selection unit 18 calculates the accuracy of the prediction model 30 when the explanatory graph vectorized using the graphlets included in the list L' as a graph kernel is input. Next, in step S24, the selection unit 18 determines whether or not the accuracy calculated in step S22 above is degraded from the accuracy calculated last time. In a case where the accuracy has not been degraded, the processing returns to step S20, and in a case where the accuracy has been degraded, the processing proceeds to step S26.

In step S26, the selection unit 18 deletes the graphlet most recently added to the list L' from the list L' and passes the list L' to the deletion unit 20. Next, in step S28, the deletion unit 20 calculates indices indicating correlations between all pairs for the graphlets in the list L'. Then, for a pair having an index indicating the correlation equal to or greater than a predetermined value, the deletion unit 20 deletes a graphlet having a lower average explanation score s from the list L'. The deletion unit 20 outputs the graphlets remaining in the list L', as graphlets to be finally used in a graph kernel, and ends the subgraph structure selection processing.

As described above, the subgraph structure selection device according to the present embodiment calculates the appearance frequencies for each of a plurality of graphlets that have been predefined, in each of one or more explanatory graphs that include a plurality of nodes and a plurality of edges. In addition, the subgraph structure selection device calculates explanation scores for each of the plurality of graphlets, based on the degree of contribution of each node given to the explanatory graph. In addition, the subgraph structure selection device calculates, for each of the plurality of graphlets, a product of the average appearance frequency, the standard deviation of the appearance frequencies, and the average explanation scores in the explanatory graph set, as an evaluation value. In addition, the subgraph structure selection device selects one graphlet from among the plurality of graphlets in descending order of the evaluation values and adds the selected one graphlet to the list. Every time the selected one graphlet is added to the list, the subgraph structure selection device calculates the accuracy of the prediction model when the explanatory graph vectorized using the graphlets included in the list is input. Then, in a case where a change in accuracy satisfies a predetermined condition, the subgraph structure selection device selects the graphlets added to the list, as the subgraph structures to be finally used in a graph kernel. This may enable to select a significant subgraph structure as a subgraph structure to be used for a graph kernel.

For example, as illustrated in FIG. 8, in the present embodiment, by selecting a graphlet to be used for a graph kernel, using the explanation score based on the degree of contribution in the explanatory graph, a simple combination of graphlets may be selected without losing a significant subgraph structure. Then, by performing prediction on a prediction target graph with the machine learning model, using the graphlets selected in this manner as a graph kernel, the prediction result explanation obtained together with the prediction result may also be represented in a simple combination without losing significance. In the example in FIG. 8, an example is illustrated in which a subgraph (thick line portion) having a structure matching the structure of the graphlet surrounded by the dashed line, among the selected graphlets, is specified as a subgraph contributing to prediction.

As a result, when causal inference or the like at a subsequent stage is performed based on the prediction result and the prediction result explanation, a significant causal relationship may be easily estimated as a causal relationship or the like between subgraphs in the graph. For example, in a case of a graph representing a chemical structure, performing causal inference may contribute to discovering a subgraph relating to a reaction mechanism.

Note that, while a mode in which the subgraph structure selection program is stored (installed) in the storage unit in advance has been described in the above embodiments, this is not restrictive. The program according to the disclosed technique can also be provided in a form stored in a storage medium such as a compact disc read only memory (CD-ROM), a digital versatile disc (DVD-ROM), or a universal serial bus (USB) memory.

## Claims

1. A subgraph structure selection program for causing a computer to execute processing comprising:
calculating appearance frequencies for each of a plurality of subgraph structures that have been predefined, in each of one or more prediction target graphs that include a plurality of nodes and a plurality of edges;
calculating explanation scores for each of the plurality of subgraph structures, based on degrees of contribution for each of the nodes or the edges to a prediction result output when each of the one or more prediction target graphs is input to a machine learning model that has been trained;
calculating, for each of the plurality of subgraph structures, products of averages of the appearance frequencies, standard deviations of the appearance frequencies, and the averages of the explanation scores in the one or more prediction target graphs; and
every time one subgraph structure is selected from among the plurality of subgraph structures and added to a list in descending order of the products, calculating accuracy of the machine learning model when the prediction target graphs vectorized by using the subgraph structures included in the list are input, and in a case where a change in the accuracy satisfies a predetermined condition, selecting the subgraph structures added to the list, as the subgraph structures to be finally used.

2. The subgraph structure selection program according to claim 1, wherein indices that indicate correlations between all pairs of the subgraph structures added to the list are calculated, and for the pairs that have the indices equal to or greater than a predetermined value, the subgraph structures that have the lower explanation scores are deleted from the list.

3. The subgraph structure selection program according to claim 1 or 2, wherein the averages of the degrees of contribution of the nodes or the edges included in subgraphs that have structures that match the subgraph structures in one of the prediction target graphs is calculated as the explanation scores.

4. The subgraph structure selection program according to claim 3, wherein, in a case where there is a plurality of the subgraphs that have the structures that match the subgraph structures in the one of the prediction target graphs, higher values of the averages of the degrees of contribution calculated for each of the plurality of the subgraphs are set as the explanation scores of the subgraph structures.

5. The subgraph structure selection program according to claim 1 or 2, wherein the predetermined condition is set as a case where a difference between the accuracy calculated last time and the accuracy calculated this time is within a predetermined value, or a case where the accuracy calculated this time is lower than the accuracy calculated last time.

6. A subgraph structure selection device comprising:
an appearance frequency calculation unit that calculates appearance frequencies for each of a plurality of subgraph structures that have been predefined, in each of one or more prediction target graphs that include a plurality of nodes and a plurality of edges;
an explanation score calculation unit that calculates explanation scores for each of the plurality of subgraph structures, based on degrees of contribution for each of the nodes or the edges to a prediction result output when each of the one or more prediction target graphs is input to a machine learning model that has been trained;
a product calculation unit that calculates, for each of the plurality of subgraph structures, products of averages of the appearance frequencies, standard deviations of the appearance frequencies, and the averages of the explanation scores in the one or more prediction target graphs; and
a selection unit that, every time one subgraph structure is selected from among the plurality of subgraph structures and added to a list in descending order of the products, calculates accuracy of the machine learning model when the prediction target graphs vectorized by using the subgraph structures included in the list are input, and in a case where a change in the accuracy satisfies a predetermined condition, selects the subgraph structures added to the list, as the subgraph structures to be finally used.

7. The subgraph structure selection device according to claim 6, further comprising a deletion unit that calculates indices that indicate correlations between all pairs of the subgraph structures added to the list, and for the pairs that have the indices equal to or greater than a predetermined value, deletes the subgraph structures that have the lower explanation scores from the list.

8. The subgraph structure selection device according to claim 6 or 7, wherein the explanation score calculation unit calculates, as the explanation scores, the averages of the degrees of contribution of the nodes or the edges included in subgraphs that have structures that match the subgraph structures in one of the prediction target graphs.

9. The subgraph structure selection device according to claim 8, wherein, in a case where there is a plurality of the subgraphs that have the structures that match the subgraph structures in the one of the prediction target graphs, the explanation score calculation unit sets higher values of the averages of the degrees of contribution calculated for each of the plurality of the subgraphs, as the explanation scores of the subgraph structures.

10. The subgraph structure selection device according to claim 6 or 7, wherein the predetermined condition is set as a case where a difference between the accuracy calculated last time and the accuracy calculated this time is within a predetermined value, or a case where the accuracy calculated this time is lower than the accuracy calculated last time.

11. A subgraph structure selection method for a computer to execute a process comprising:
calculating appearance frequencies for each of a plurality of subgraph structures that have been predefined, in each of one or more prediction target graphs that include a plurality of nodes and a plurality of edges;
calculating explanation scores for each of the plurality of subgraph structures, based on degrees of contribution for each of the nodes or the edges to a prediction result output when each of the one or more prediction target graphs is input to a machine learning model that has been trained;
calculating, for each of the plurality of subgraph structures, products of averages of the appearance frequencies, standard deviations of the appearance frequencies, and the averages of the explanation scores in the one or more prediction target graphs; and
every time one subgraph structure is selected from among the plurality of subgraph structures and added to a list in descending order of the products, calculating accuracy of the machine learning model when the prediction target graphs vectorized by using the subgraph structures included in the list are input, and in a case where a change in the accuracy satisfies a predetermined condition, selecting the subgraph structures added to the list, as the subgraph structures to be finally used.

12. The subgraph structure selection method according to claim 11, wherein
indices that indicate correlations between all pairs of the subgraph structures added to the list are calculated, and for the pairs that have the indices equal to or greater than a predetermined value, the subgraph structures that have the lower explanation scores are deleted from the list.

13. The subgraph structure selection method according to claim 11 or 12, wherein
the averages of the degrees of contribution of the nodes or the edges included in subgraphs that have structures that match the subgraph structures in one of the prediction target graphs is calculated as the explanation scores.

14. The subgraph structure selection method according to claim 13, wherein
in a case where there is a plurality of the subgraphs that have the structures that match the subgraph structures in the one of the prediction target graphs, higher values of the averages of the degrees of contribution calculated for each of the plurality of the subgraphs are set as the explanation scores of the subgraph structures.

15. The subgraph structure selection method according to claim 11 or 12, wherein
the predetermined condition is set as a case where a difference between the accuracy calculated last time and the accuracy calculated this time is within a predetermined value, or a case where the accuracy calculated this time is lower than the accuracy calculated last time.

16. A non-transitory computer readable storage medium storing a subgraph structure selection program for causing a computer to execute a process comprising:
calculating appearance frequencies for each of a plurality of subgraph structures that have been predefined, in each of one or more prediction target graphs that include a plurality of nodes and a plurality of edges;
calculating explanation scores for each of the plurality of subgraph structures, based on degrees of contribution for each of the nodes or the edges to a prediction result output when each of the one or more prediction target graphs is input to a machine learning model that has been trained;
calculating, for each of the plurality of subgraph structures, products of averages of the appearance frequencies, standard deviations of the appearance frequencies, and the averages of the explanation scores in the one or more prediction target graphs; and
every time one subgraph structure is selected from among the plurality of subgraph structures and added to a list in descending order of the products, calculating accuracy of the machine learning model when the prediction target graphs vectorized by using the subgraph structures included in the list are input, and in a case where a change in the accuracy satisfies a predetermined condition, selecting the subgraph structures added to the list, as the subgraph structures to be finally used.
